Europäisches Patentamt

European Patent Office

Office européen des brevets

(11) Publication number: **0 509 569 A2**

# EUROPEAN PATENT APPLICATION

(21) Application number: **92200811.5**

(22) Date of filing: **20.03.92**

(51) Int. Cl.5: **B29C 47/64**, B29C 47/40, B29C 47/66

(30) Priority: **15.04.91 IT MI911030**

(43) Date of publication of application:
**21.10.92 Bulletin 92/43**

(84) Designated Contracting States:
**CH DE ES FR GB IT LI**

(71) Applicant: **POMINI FARREL S.p.A.**
**Via Leonardo da Vinci 20**
**I-21053 Castellanza Varese(IT)**

(72) Inventor: **Guggiari, Andrea**
**Via Venusti 3**
**Como(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) **Machine for the extrusion of thermoplastic polymers and the like comprising an internal mixer.**

(57) A machine for manufacturing thermoplastic polymers comprising a multiplicity of coaxial components (1a, 1b, 1c, 1d, 1e, 1f) adjacent to and made integral with one another, forming inside thereof a chamber extending lengthwise within which is located a pair of interacting coaxial shafts (5, 6) having portions (5a, 6a; 5b, 6b; 5d, 6d; 5e, 6e) correspondingly differentiated to provide sections for feeding and premixing the compound, there being interposed between such sections a machine section (1c, 5c, 6c) constituting an internal mixer, thus forming a single assembly with coaxial components capable of carrying out full processing of the compound from the raw material to extrusion, without discontinuity of sequence.

Fig.1

The object of this invention is a machine for processing thermoplastic polymers comprising an extruder and a mixer of internal type capable of carrying out full processing of the product from the raw materials to final extrusion without discontinuity of sequence.

It is known that the process of extrusion of thermoplastic polymers provides for an initial phase of preparation of the rubber according to the desired composition by mixing a base polymer which is filled with various additives to enhance certain features thereof in relation to others, thus bringing about various types of compound suited to different uses.

The compound is subsequently extruded into the desired shapes to meet various needs.

Such mixing and extrusion phases are performed by individual machines, known as mixers and extruders respectively, which have certain technical features specific to the type of operation to performed. In particular it is required that the mixers be versatile and readily adaptable for mixing different types of compounds, and that they ensure control and regulation of the mixing temperature and high productivity.

It is also known that attempts have been made to perform the combined mixing and extrusion operation with extruders of the type provided with two screwed shafts acting together to achieve both feeding of the product and mixing thereof.

Such types of machines, however, pose numerous disadvantages, including low mixing capacity, particularly for certain types of compounds filled with carbonates or talcs to improve the mechanical characteristics, lack of flexibility when changing the type of compound, low productivity and difficulty in controlling the temperature.

There is therefore posed the technical problem of producing a single machine which combines the features of flexibility, adaptability and productivity of the mixers with the ability to carry out extrusion without intermediate operations outside the machine.

Such technical problem is resolved by a machine for processing thermoplastic polymers which includes in combined form a multiplicity of coaxial components, adjacent to and made integral with one another so as to form a chamber extending lengthwise, within which is located a pair of interacting coaxial shafts having correspondingly differentiated portions to provide sections for feeding and premixing the polymer, there being interposed between such sections a machine section constituting an internal mixer, thus forming a single assembly with coaxial components capable of carrying out full processing of the compound from the raw material to extrusion without discontinuity of sequence.

More particularly, it is provided that such machine sections are made up of components forming internally a chamber according to two circumferences intersecting one another in the longitudinal axis and that such shafts have sections corresponding to the feed sections formed in the manner of screws interacting with one another.

According to the invention another feature of the machine is the fact that the shaft sections adjoining the mixing chamber are formed in the manner of two rotors, and particularly rotors of multi-blade tangential type.

Further details may be obtained from the following description given by way of simplification, but non-exhaustive, with reference to the attached figures which show:

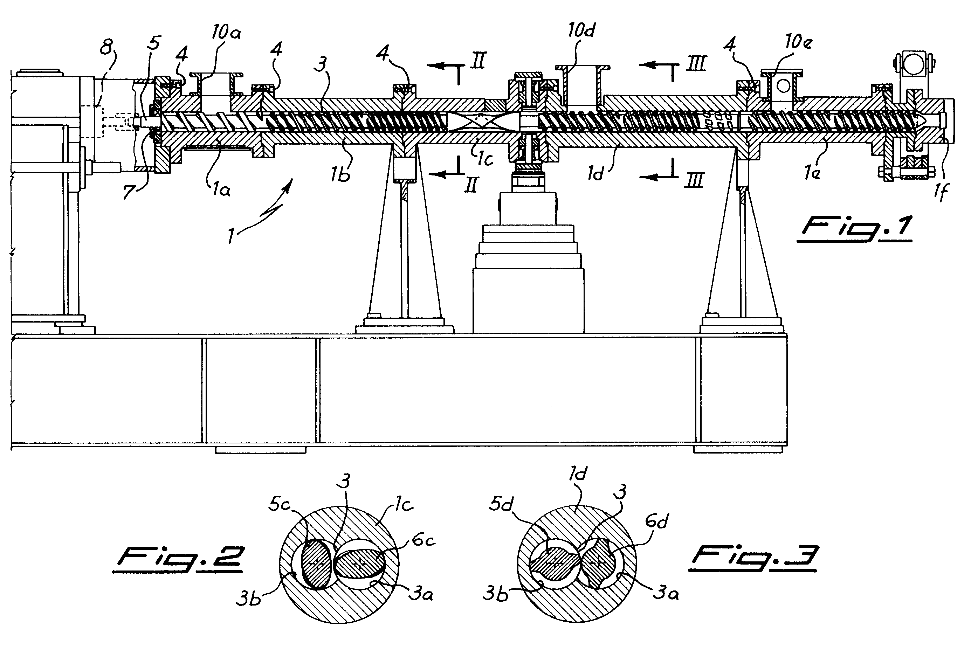

in figure 1: a cross-section of the machine in longitudinal plane;

in figure 2: a cross-section according to plotting plane II - II of fig. 1;

in figure 3: a cross-section according to plotting plane III - III of figure 1.

As illustrated in the figure, machine 1 according to the invention consists of a series of components 1a, 1b, 1c, 1d, 1e, 1f which are made integral with one another by means of bolts 4 or the like in order to form a single chamber of the desired length.

Such components have moreover a different external form according to the position occupied thereby in the sequence, which form also determines the different use of each section.

In particular, component 1a is provided with upper hopper 10a for feeding the constituent materials of the compound and component 1d for adding special fillers as required, component 1e is provided with hopper 10e fitted with regulating valves for degassing the compound and, lastly, component 1f provides means of attachment to the actual extrusion head which is not illustrated. Within the chamber thus formed are inserted two shafts 5, 6 supported at the ends by bearings 7 and driven by motors 8 in a manner which is self-evident and is therefore only shown in outline in the figures.

The two shafts 5 and 6 are in turn provided with sections of different shape and cross-section in order to perform the various operations throughout the route covered by the compound from inlet 10a to outlet 1f.

More particularly, the two shafts are provided with sections 5a, 6a; 5b, 6b, in which 5e and 6e are formed in the manner of screws of different pitches and generatrices so that their interaction brings about premixing and feeding of the compound.

Shaft section 5c, 6c is shaped instead as a multi-blade rotor of the type interacting tangentially.

Thus machine section 5c corresponding to shaft section 5c, 6c is an effective internal mixer in which takes place a mixing action capable of being easily regulated and controlled by suitable means which are self-evident and are therefore not illustrated and described.

At the outlet of such mixing chamber there is furthermore provided a known device for regulating the opening of the chamber, which is likewise known and not described in detail.

With such configuration the materials fed via hopper 10a are treated prior to the action of the shafts of sections 1a and 1b and at the same time undergo an initial kneading operation before entering section 1c where, through the action of the two rotors 5c, 6c, the actual mixing operation takes place under controlled conditions.

During subsequent movement towards the outlet, the compound is further mixed and where necessary filled with additives inserted via hopper 10d and degassed via hopper 10d.

As is apparent from the foregoing description, the assembly according to the invention consists of a single horizontal machine which carries out mixing by means of an effective internal mixer capable of ensuring higher productivity and versatility, with processing parameters which can be easily regulated and providing means for accurate control of temperature, while constituting at the same time a machine for supplying the extrusion head to which the compound may be fed, following mixing of the raw materials, without discontinuity of sequence due to the need for intermediate phases of loading, unloading and processing.

## Claims

1. A machine for processing thermoplastic polymers, characterized in that it comprises in combined form a multiplicity of coaxial components (1a,1b,1c,1d,1e,1f) adjacent to and made integral with one another so as to form inside thereof a chamber extending lengthwise, within which is located a pair of interacting coaxial shafts (5,6) having portions (5a,6a;5b,6b;5d,6d;5e,6d) correspondingly differentiated to provide sections for feeding and premixing the compound, there being interposed between such sections a machine section (1c,5c,6c) consisting of an internal mixer, thus forming a single assembly of coaxial components capable of carrying out full processing of the compound from the raw material to extrusion, without discontinuity of sequence.

2. A machine according to claim 1, characterized in that such machine sections (1a,1b,1c,1d,1e,1f) consist of components forming internally a chamber according to two circumferences intersecting one another in the longitudinal axis.

3. A machine according to claim 1 characterized in that such shafts (5, 6) have sections (5a,6a;5b,6b;5d,6d;5e,6e) corresponding to the feed sections, shaped in the form of screws interacting with one another.

4. A machine according to Claim 1 characterized in that shaft sections (5, 6) corresponding to mixing chamber (1c) are shaped according to two rotors (5c,6c).

5. A machine according to claims 1 and 4 characterized in that such rotors (5c,6c) are of the multi-blade tangential type.

6. A machine according to claims 1 and 4 characterized in that such coaxial components and such shafts are preferably arranged with the longitudinal axis located horizontally.

Fig.1

Fig.2

Fig.3

EP 0 509 569 A2